# EUROPEAN PATENT SPECIFICATION

(11) **EP 0 683 404 B1**
(45) Date of publication and mention of the grant of the patent: **03.11.1999**
(21) Application number: 94830166.8
(22) Date of filing: 08.04.1994
(51) Int. Cl.: G02B 5/18

(54) **Method and apparatus for producing diffraction gratings by machine forming in a fast operation cycle**
Verfahren und Gerät für die Herstellung von Beugungsgittern in schnellem Bearbeitungssystem
Méthode et appareil pour la production d'un réseau de diffraction pour usinage en cycle rapide

(43) Date of publication of application: 22.11.1995
(73) Proprietor: ENEA ENTE PER LE NUOVE TECNOLOGIE, L'ENERGIA E L'AMBIENTE, I-00198 Roma (IT)
(72) Inventor: Cinti, Mario, I-00178 Roma (IT); Botticelli, Antonio, I-00044 Frascati (IT); De Angelis, Alberto, I-00199 Roma (IT); Garosi, Franco, I-00046 Grottaferrata (IT); Gazzi, Giorgio, I- 00156 Roma (IT); Righini, Luciano, I- 00133 Roma (IT); Vinciguerra, Damiano, I- 00044 Frascati (IT); Turchetti, Gianfranco, I- 00149 Roma (IT)
(74) Representative: Sarpi, Maurizio

(56) References cited:
- EP-A- 0 169 326
- EP-A- 0 428 390
- EP-A- 0 513 755
- FR-A- 2 632 218

## Description

The present invention relates to the field of the advanced optical technology and more particularly a method of producing diffraction gratings by machine forming in a fast operation cycle. This invention also relates to an apparatus for carrying out such method.

It is known, from document EP 0169326, a process for the production of a macroscopic surface pattern with a microscopic structure, in particular a structure which has an optical-diffraction effect, by bulding selected surface regions of an embossing die having a microstructure into a thermoplastic layer, characterised in that a ray source is used to heat an approximately punctiform element of the surface of the thermoplastic layer. Said element lies in the focal spot of the ray source, so that the microstructure of the embossing die is plastically moulded only in said element of the surface of the thermoplastic layer, and that the surface pattern is composed of a plurality of such elements of the surface.
In other words, said known process (and apparatus) is intended for embossing a pattern having a microscopic relief structure, such as an optical diffraction grating, onto a layer od thermoplastic material.
Therefore, the method and apparatus disclosed in EP 0169326 are intended to plastically mould a thermoplastic layer having a predetermined optical diffraction grating, and are not able to create an optical diffraction grating.

The present invention aims at providing a method and a device of the above-mentioned type for producing diffraction gratings in a considerably lower time than that required by the conventional mechanical and/or photomechanical techniques of the present state of art.
According to the invention a method is provided consisting of the following steps: arranging a solid or added metal substrate on a displaceable means which moves at a controlled speed; and carrying out on said substrate a succession of sizing operations by a punching tool combined with a piezoelectric actuator so as to produce on said substrate a series of grooves forming the desired grating.
Still according to the invention said punching tool is formed of a fixture provided with an active wedge-shaped diamond point having a rectilinear cutting edge arranged transversally to the displacement direction of the movable carriage of the substrate.

This invention will now be described with reference to the accompanying drawings which show by way of an illustrative, non-limitative example a preferred embodiment of the invention.

In the drawings:

Fig. 1 is a schematic perspective view of the apparatus for carrying out the method according to the invention.

Fig. 2 is a block diagram of the control assembly of the apparatus of Fig. 1.

Figs. 3 and 4 show the results of some characteristic tests of the invention.

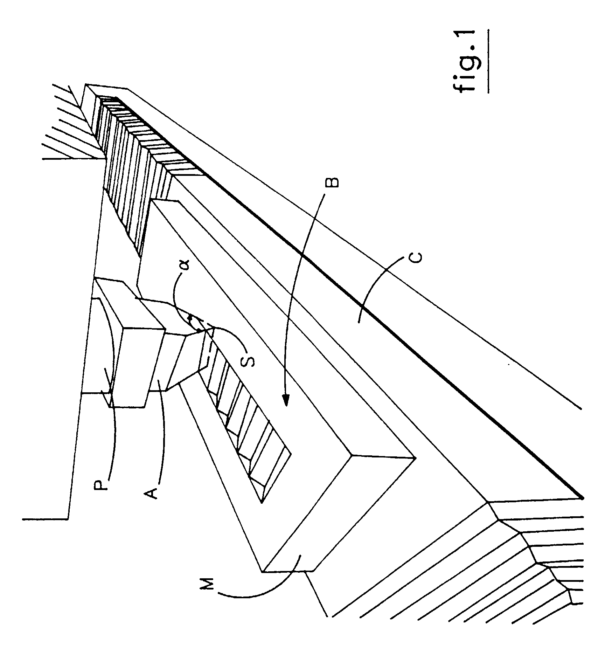

With reference to Fig. 1, a wedge-shaped diamond point tool A machined with a determined angle is fixedly attached to a piezoelectric actuator P capable of carrying out a vertical micrometrically controlled displacement with a high repetition frequency. Diamond A is arranged with a horizontally aligned cutting edge S.
Translation carriage C slides under tool A horizontally and transversally with respect to cutting edge S of the tool, said carriage carrying a metal substrate M having a surface B, on which the grating is cut, which has been formerly machined with optical finish and carefully positioned with respect to the edge of the tool.
The combined movements of tool A and substrate M produces a succession of rectilinear, parallel cuts I (forming the grooves of the grating) spaced by a gap of p = v/f, where v is the sliding speed of substrate M, and f is the operation frequency of the piezoelectric actuator P. By varying v during the cutting step, gratings having varying spacing may be produced.
Also the depth of cuts I can be varied by a suitable modification of the diamond point A and the operating characteristics of piezoelectric actuator P.

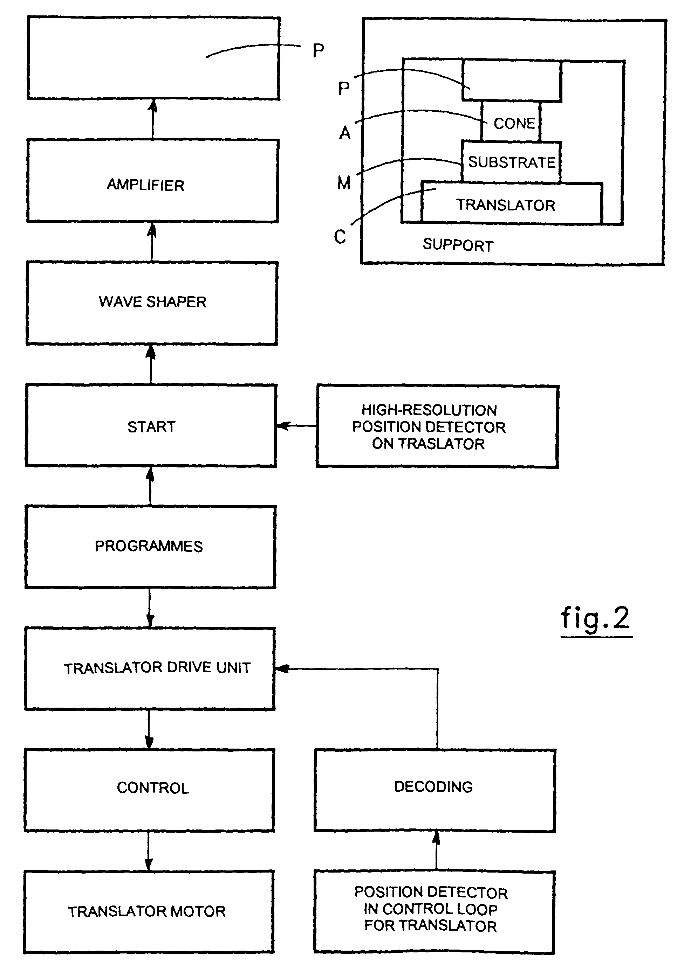

A block diagram of the control assembly of the described apparatus is shown in Fig. 2.

The invention allows a number of advantages to be achieved with respect to the already known techniques, among which a higher production speed which entails a considerable reduction of the cost of the end product, and a high capability of controlling the operating parameters with the result of a high flexibility as far as the type of the produced components is concerned.

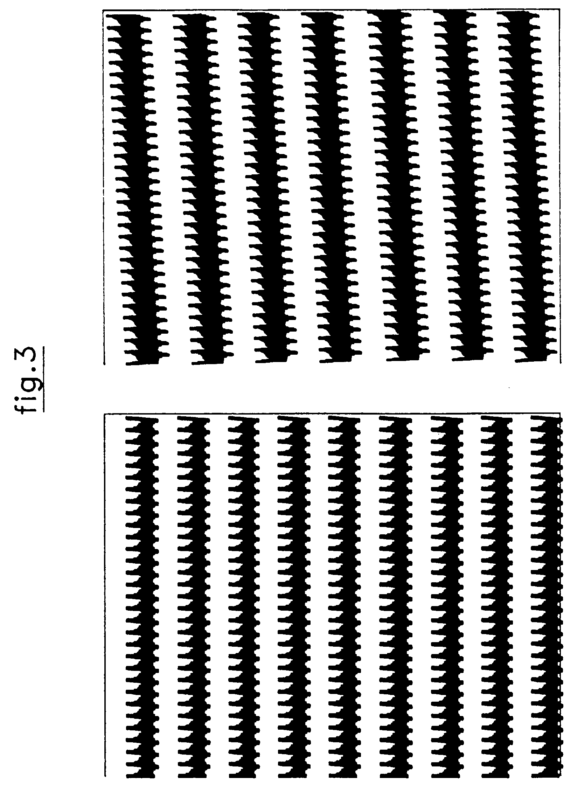

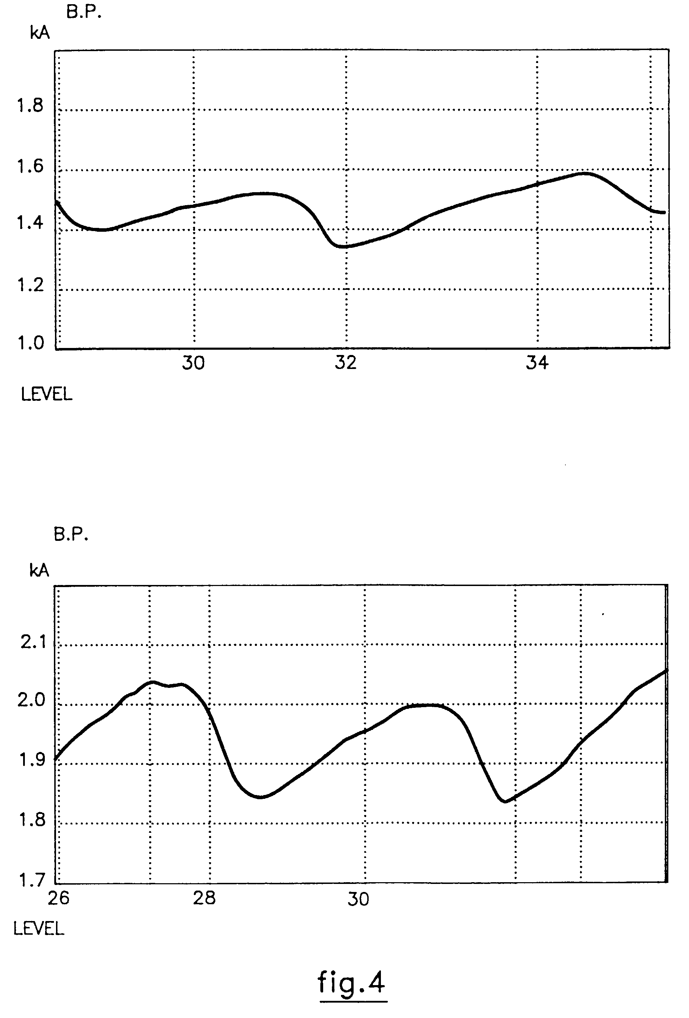

Fig. 3 shows two interference diagrams obtained by interferometer microscope and concerning the profile of gratings provided by the above-mentioned method, and Fig. 4 shows the profile of a grating detected by a mechanical high-resolution profilometer.

The invention may be advantageously applied to the production of a large range of advanced optical components such as the diffraction gratings having varying spacing, which find application in the VUV spectroscopy and soft X-rays. Such gratings can be particularly used in the field of the analysis of the synchrotron radiations and in the space applications as well.

The present invention has been illustrated and described with reference to a preferred embodiment thereof, however it should be understood that construction and/or operating modifications can be in practice made by those skilled in the art without departing from the scope of the present invention.

## Claims

1. A method of producing diffraction gratings, comprising the steps of arranging the substrate, on which the grating grooves are to be produced, on a translation means, having a controlled speed of traslation, providing said grooves by repetitively punching with a tool moving with respect to the substrate;
characterized in that:
each step of punching comprises punching the substrate directly with a wedge-shaped diamond edge of said tool, while controlling the translation of the substrate with regard to said punching tool, so as to provide one groove at any stroke of the tool on the surface.

2. A method according to claim 1, characterized in that the translational speed of the substrate can be changed during the translation of the substrate with respect to the punching tool so as to provide corresponding variations of the gap between the grating grooves.

3. A method according to claims 1 and 2, characterized in that the punching tool moves vertically.

4. A method according to claims 1 to 3, characterized in that the method comprises providing the punching tool with a wedge-shaped diamond edge having the edge arranged perpendicularly to the sliding direction of the carriage carrying the substrate.

5. A method according to claims 1 to 4, characterized in orienting the substrate formed of a solid body and having a surface with optical finish so that said surface faces the punching tool.

6. An apparatus for carrying out the method according to claims 1 and 2, where the apparatus comprises:
a) a punching tool provided with a wedge-shaped diamond edge;
b) a piezoelectric actuator arranged for driving the punching tool;
c) an electronic assembly arranged for controlling the actuator;
d) a translation system arranged for carrying the substrate;
e) control means arranged for controlling the speed of the translation of the substrate, wherein the electronic assembly and control means are arranged so as to provide one groove at any stroke of the tool on the surface of the substrate.

7. An apparatus according to claim 6, characterized in that said the electronic assembly is an electro-optical assembly.

## Patentansprüche

1. Verfahren zum Herstellen von Beugungsgittern mit folgenden Schritten:
Anordnen des Substrats, auf dem die Gitternuten zu erzeugen sind, auf einer Translationseinrichtung mit einer gesteuerten Translationsgeschwindigkeit, Vorsehen der Nuten durch wiederholtes Stanzen mit einem Werkzeug, welches sich bezüglich des Substrats bewegt;
dadurch gekennzeichnet, daß
jeder einzelne Schritt des Stanzens das Stanzen des Substrats direkt mit einer keilförmigen Diamantkante des Werkzeugs unter gleichzeitigem Steuern der Translation des Substrats bezüglich des Stanzwerkzeuges umfaßt, um eine Nut bei jedem Schlag des Werkzeuges auf der Oberfläche vorzusehen.

2. Verfahren nach Anspruch 1, dadurch gekennzeichnet, daß die Translationsgeschwindigkeit des Substrats während der Translation des Substrats bezüglich des Stanzwerkzeuges geändert werden kann, um entsprechende Variationen des Spalts zwischen den Gitternuten vorzusehen.

3. Verfahren nach Anspruch 1 oder 2, dadurch gekennzeichnet, daß sich das Stanzwerkzeug vertikal bewegt.

4. Verfahren nach Anspruch 1 bis 3, dadurch gekennzeichnet, daß das Verfahren folgenden Schritt aufweist:
Vorsehen des Stanzwerkzeuges mit einer keilförmigen Diamantkante mit der Kante senkrecht zur Verschieberichtung des Trägers, der das Substrat befördert, angeordnet.

5. Verfahren nach Anspruch 1 bis 4, gekennzeichnet durch das Orientieren des Substrats, das aus einem Festkörper gebildet ist und eine Oberfläche mit optischer Bearbeitung aufweist, so daß die Oberfläche dem Stanzwerkzeug gegenüberliegt.

6. Vorrichtung zum Ausführen des Verfahrens nach Anspruch 1 und 2, wobei die Vorrichtung aufweist:
a) ein mit einer keilförmigen Diamantkante versehenes Stanzwerkzeug;
b) einen piezoelektrischen Aktuator, welcher zum Ansteuern des Stanzwerkzeugs ausgelegt ist;
c) eine elektronische Anordnung, welche zum Steuern des Aktuators ausgelegt ist;
d) ein Translationssystem, welches zum Befördern des Substrats ausgelegt ist;
e) eine Steuereinrichtung, welche zum Steuern der Translationsgeschwindigkeit des Substrats ausgelegt ist, wobei die elektronische Anordnung und die Steuereinrichtung derart gestaltet sind, daß sie eine Nut bei jedem Schlag des Werkzeuges auf der Oberfläche des Substrats vorsehen.

7. Vorrichtung nach Anspruch 6, dadurch gekennzeichnet, daß die elektronische Anordnung eine elektro-optische Anordnung ist.

## Revendications

1. Procédé pour fabriquer des réseaux de diffraction, comprenant les étapes consistant à disposer le substrat, sur lequel les rainures de diffraction doivent être formées, sur des moyens de translation ayant une vitesse de translation commandée, et de former lesdites rainures au moyen d'un poinçonnage répétitif à l'aide d'un outil se déplaçant par rapport au substrat ;
caractérisé en ce que :
chaque étape de poinçonnage comprend le poinçonnage du substrat directement avec une arête en diamant en forme de coin dudit outil, tout en commandant la translation du substrat par rapport audit outil de poinçonnage, de manière à former une rainure lors de chaque course de l'outil sur la surface.

2. Procédé selon la revendication 1, caractérisé en ce que la vitesse de translation du substrat peut être modifiée par la translation du substrat par rapport à l'outil de poinçonnage de manière à créer des variations correspondantes de l'interstice entre les rainures de diffraction.

3. Procédé selon les revendications 1 et 2, caractérisé en ce que l'outil de poinçonnage se déplace verticalement.

4. Procédé selon les revendications 1 à 3, caractérisé en ce que le procédé consiste à équiper l'outil de poinçonnage d'une arête en diamant en forme de coin, cette arête étant disposée perpendiculairement à la direction de glissement du chariot portant le substrat.

5. Procédé selon les revendications 1 à 4, caractérisé par l'orientation du substrat formé d'un corps solide et possédant une surface ayant un fini optique de telle sorte que ladite surface est tournée vers l'outil de poinçonnage.

6. Dispositif pour la mise en oeuvre du procédé selon les revendications 1 et 2, dans lequel le dispositif comprend :
a) un outil de poinçonnage pourvu d'une arête en diamant en forme de coin ;
b) un actionneur piézoélectrique agencé de manière à entraîner l'outil de poinçonnage ;
c) un ensemble électronique agencé de manière à commander l'actionneur ;
d) un système de translation agencé de manière à porter le substrat ;
e) des moyens de commande agencés de manière à commander la vitesse de translation du substrat, l'ensemble électronique et les moyens de commande étant disposés de manière à former une rainure lors de chaque course de l'outil sur la surface du substrat.

7. Dispositif selon la revendication 6, caractérisé en ce que ledit ensemble électronique est un ensemble électro-optique.
